# EUROPEAN PATENT APPLICATION

(11) **EP 0 604 030 A2**
(43) Date of publication of application: **29.06.1994**
(21) Application number: 93309498.9
(22) Date of filing: 29.11.1993
(51) Int. Cl.: G06F 12/08

(54) **Copy back cache tag memory**

(30) Priority: 30.11.1992 US 982862
(71) Applicant: SGS-THOMSON MICROELECTRONICS, INC., Carrollton Texas 75006 (US)
(72) Inventor: McClure, David Charles, Denton County, Texas 75007 (US)
(74) Representative: Palmer, Roger

(57) **Abstract**

A cache tag memory array which includes a bit position for a status bit corresponding to each entry in the cache tag memory array. The status bit is included in each tag for a tag RAM. The status bit indicates whether or not updated data in the cache memory has been updated in main memory. Upon an initial entry into the cache tag memory, the status bit is set to a first state. The status bit is the set to a second state when a local processor updates data in the cache memory and the data is not immediately updated in main memory. When data in the cache memory is to be written over by new data, a cache controller monitors whether or not the status bit is set to the second state. If the status bit is set to the second state, the data in the cache memory must be written into the main memory before the new data can be written into the cache memory. If the status bit is not set to a second state, the new data is written immediately into the cache memory. Including the status bit in each of the tags results in a savings of board space and allows the cache memory to operate more efficiently.

## Description

The present invention relates in general to digital computer systems, and more particularly to cache memory systems.

Cache memories are used in many computer systems to improve system performance. A cache memory is a relatively small, fast memory which resides between a central processor and main system memory. Whenever the processor reads the contents of a memory location which is stored in the cache memory, the time required to access such location is drastically reduced. A good cache technique can provide a "hit ratio" of well over ninety percent, meaning that no main memory access is necessary for over ninety percent of the read operations performed. Access of data which is stored in the cache can improve access times by factors of three to ten times.

A cache performs functions requiring two different types of memory. The first type is the data memory, in which the data is actually stored. The second type is known as a tag memory, or tag RAM, which is used to determine which memory locations are actually stored in the cache. In general, the cache tag RAM contains a plurality of entries corresponding to the entries of the data cache. Each entry is indexed by some number of least significant bits of the address generated by the central processor, with the tag entry itself containing the most significant bits of the memory location which is stored in the corresponding data cache entry. If the most significant bits stored in the cache tag match the most significant bits of the address currently being generated, with the least significant bits of this address acting as an index to the tag RAM, a cache "hit" has occurred and the data to be read may be taken from the corresponding data cache entry. If data corresponding to the desired address is not located in the data cache, the tag entry will not match the most significant bits of the address, and a "miss" occurs. This indicates that the data must be retrieved from main system memory and placed into the data cache. At this time, the current contents of the cache tag entry are overwritten with the most significant bits of the newly retrieved address.

In multi-processor systems, it is possible to provide each processor in a system with its own cache memory. Each local processor accesses its own cache whenever possible, and accesses main system memory through a system bus only when necessary.

When data is written into a memory location, it may be retained in the cache, to be written to main memory at a later time, or it may be written immediately to main memory as well as to the cache. The former function is known as copy back or write back, while the latter function is known as write through or copy through.

The copy back cache format introduces an important problem of coherency. When a local processor writes data into its cache memory, the corresponding data in main memory is now invalid. A status bit is typically utilized to indicate whether or not data in a cache memory has also been updated in main memory. This status bit is known in the art as a "dirty bit." Typically, the status bit is set to signify that main memory has not been updated. When data in the cache memory is to be written over by new data, the cache controller will monitor the data in the cache to determine if the status bit has been set. If the status bit has been set, the data in the cache memory must be written to main memory before the new data is written into the cache memory.

One technique utilized in dealing with this coherency problem is to store the status bit in a separate memory from the cache tag memory. Using a separate memory for the status bit, however, results in an area penalty on the board, since a separate RAM is needed to store the status bit. Additionally, the cache memory operates less efficiently, because information about the data in the cache memory is stored in several memory arrays. This forces the system to access these several memory arrays to retrieve the data and ascertain its integrity.

Therefore, it would be desirable to provide a cache tag memory which results in a savings of board space and operates more efficiently.

A cache tag memory array is provided which includes a bit position for a status bit corresponding to each entry in the cache tag memory array. The status bit is included in each tag for a tag RAM. The status bit indicates whether or not updated data in the cache memory has been updated in main memory. When data is first written into the cache tag memory, the status bit is set to a first state. The status bit is then set to a second state when a local processor updates data in the cache memory and the data is not immediately updated in main memory. When data in the cache memory is to be replaced after a cache miss, a cache controller monitors whether or not the status bit is set to the second state. If the status bit is set to the second state, the data in the cache memory must be written into the main memory before the new data can be written into the cache memory. If the status bit is not set to a second state, the new data is written immediately into the cache memory. Including the status bit in each of the tags results in a savings of board space and allows the cache memory to operate more efficiently.

The novel features believed characteristic of the invention are set forth in the appended claims. The invention itself however, as well as a preferred mode of use, and further objects and advantages thereof, will best be understood by reference to the following detailed description of an illustrative embodiment when read in conjunction with the accompanying drawings, wherein:
**Figure 1** is a high level block diagram of a multi-processor computer system;
**Figure 2** is a high level block diagram showing a cache memory utilizing a cache tag memory according to the prior art;
**Figure 3** is a high level block diagram showing a cache memory utilizing a cache tag memory according to the present invention;
**Figure 4** illustrates an entry in a cache tag memory which is utilized by the present invention; and
**Figure 5** is an alternative high level block diagram illustrating a cache memory utilizing a cache tag memory according to the present invention.

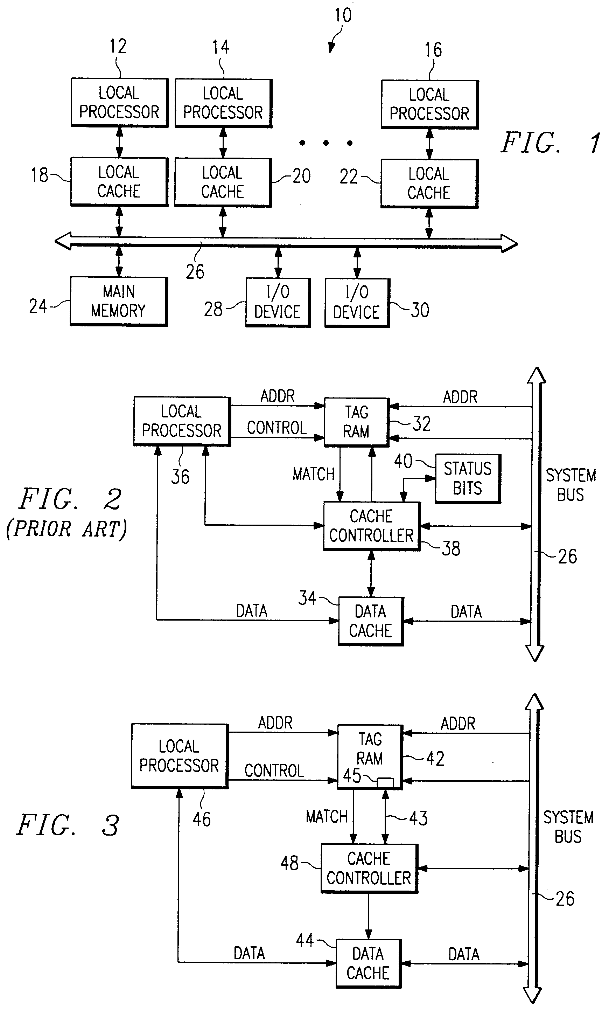

Referring to **Figure 1**, a multi-processor computer system is illustrated and referred to generally with the reference number **10**. Local processors **12, 14, 16** are each provided with a local cache memory **18, 20, 22**, respectively. The processors **12, 14, 16** communicate with each other and with a main system memory **24** through a system bus **26**. A plurality of input/output devices **28, 30** are also attached to the system bus **26**. Input/output devices **28, 30** typically do not contain local cache memories.

In the preferred embodiment, the multi-processor computer system **10** utilizes a copy back cache technique. With a copy back cache, data written into a memory location in local cache **18** is retained in local cache **18**, and is not written to main memory **24** at that time. The data is written to main memory **24** at a later time, typically when a cache miss requires that new data be loaded into the cache. The copy back cache approach introduces an important problem of coherency. One example of a coherency problem occurs when local processor **12** alters data in its cache memory **18**, thereby rendering the corresponding data in main memory **24** invalid.

**Figure 2** is a high level block diagram showing a cache memory utilizing a cache tag memory according to the prior art. A cache tag RAM **32** and a data cache **34** communicate with system bus **26** and local processor **36**. Cache controller **38** performs the usual cache control functions found in caches which are suitable for use with single processor systems.

Data cache **34** exchanges data with the local processor **36** and system bus **26** under the control of cache controller **38**. Various control signals are exchanged by the local processor **36** and cache controller **38**, and between the cache controller **38** and the system bus **26**. Address and control signals are communicated from local processor **36** to cache tag RAM **32**. Address and control signals are also communicated between cache tag RAM **32** and system bus **26**.

Tag RAM **32** also passes a signal MATCH to cache controller **38**. MATCH indicates that the memory location currently being addressed by local processor **36** resides in the data cache **34**, and that the entry is currently valid. Cache controller **38** then causes the location being accessed by local processor **36** to be read directly from data cache **34**. If MATCH indicates a miss, cache controller **38** causes the requested address to be loaded into the data cache **34** and tag RAM **32** prior to completing the local processor memory request.

As known in the art, tag RAM **32** is used to determine which memory locations are actually stored in data cache **34**. In general, cache tag RAM **32** contains a plurality of entries corresponding to the entries of data cache **34**. Each entry is indexed by some number of least significant bits of the address generated by a central processor, with the tag entry itself containing the most significant bits of the memory location which is stored in the corresponding data cache entry. If the most significant bits stored in tag RAM **32** match the most significant bits of the address currently being generated, with the least significant bits of this address acting as an index to the tag RAM **32**, a cache "hit" has occurred and the data to be read may be taken from the corresponding data cache entry. If data corresponding to the desired address is not located in data cache **34**, the tag entry will not match the most significant bits of the address, and a "miss" occurs. This indicates that the data must be retrieved from main system memory (not shown) and placed into data cache **34**. At this time, the current contents of the cache tag entry are overwritten with the most significant bits of the newly retrieved address, and the corresponding data cache entry is overwritten with a new data cache entry.

Local processor **36** typically alters data locally. This means local processor **36** alters data in data cache **34** only. When this is done, a status bit, or "dirty" bit, is set to signify that the data has been altered in data cache **34** but not in the main memory. The status bit is stored in a separate memory **40** which is the same depth as tag RAM **32**. When new data is to be added into the data cache **34**, cache controller **38** must monitor the status bit for the data which is to be overwritten to see if the status bit has been set. If the status bit is set, the data to be overwritten must first be written to main memory before loading the new data into data cache **34**.

Using the separate memory **40** for the status bits, however, results in an area penalty on the board, since a separate RAM is needed to store the status bits. Additionally, the cache memory operates less efficiently, because information about the data in the cache memory is stored in several memory arrays. This forces the system to access these several memory arrays to retrieve the data and ascertain its integrity.

**Figure 3** is a high level block diagram showing a cache memory utilizing a cache tag memory according to the present invention. A cache tag RAM **42** and a data cache **44** communicate with system bus **26** and local processor **46**. Cache controller **48** performs the usual cache control functions found in caches which are suitable for use with single processor systems.

The cache memory in **Figure 3** operates in a similar manner described above with reference to **Figure 2**, with the exception of storing the status bits in the tag RAM **42**. When data and tags corresponding to the data are first written into data cache **44** and tag RAM **42**, respectively, or during an update from main memory (not shown), the status bits are set to a first state, preferably a 0. This may be accomplished by utilizing a status bit bus **43** between tag RAM **42** and cache controller **48** and a separate data in/data out pin **45** in tag RAM **42**. When loading in data from main memory, the cache controller **48** can drive the status bit bus to the first state, thereby setting the status bits to the first state.

When local processor **46** updates data in data cache **44**, the status bit which corresponds to the entry being updated is set to a second state, preferably a 1. The separate data in/data out pin **45** is used to set the status bits to a second state when data is altered by local processor **46**. Setting the status bit to a second state indicates that the entry has been updated in data cache **44** but not in the main memory.

Before an entry in data cache **44** is overwritten with a new entry, which occurs as the result of a read or write "miss", cache controller **48** monitors the status bit which corresponds to the entry which will be overwritten to see if the status bit has been set to a 1. If the status bit is set to a 1, the entry to be overwritten is written into its corresponding location in main memory before the new entry is stored in data cache **44**. If the status bit has not been set to a 1, the entry to be overwritten may be immediately replaced with the new entry.

During a processor write hit, local processor **46** updates an entry in data cache **44**. Processor **46**, or an external circuit, will determine that the write request from processor **46** resulted in a hit and enable a tag to be written into tag RAM **42**. The same tag is then rewritten into tag RAM **42** with the status bit set to the second state.

In the preferred embodiment, the status bits are not controlled by output enable. Generally, output enable disables the outputs when an entry in the tag RAM **42** is compared with an address to determine the existence of a match. If the status bits are controlled by output enable, the status bit output is disabled as well. This is undesirable because the state of the status bits needs to be able to be monitored. A dirty bit, however, is not included in the comparison to determine if a match has occurred. Generally the most significant bits in the tag entry are compared with an address generated by a processor to see if a match exists.

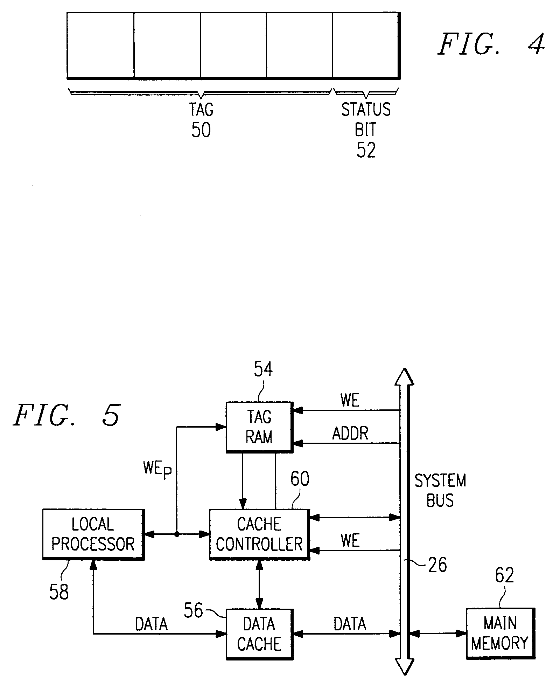

**Figure 4** illustrates an entry in a cache tag memory which is utilized by the present invention. A plurality of bits **50** labeled "Tag" correspond to the most significant bits of a memory location stored in a data cache entry. A bit **52** labeled "Status bit" is included in the tag and indicates whether or not an entry has been updated by a local processor. Other bits not shown in **Figure 4** may also be included in the tag, examples being a snoop bit, a parity bit, and a valid bit.

Referring to **Figure 5**, an alternative high level block diagram illustrates a cache memory utilizing a cache tag memory according to the present invention. A cache tag RAM **54** and a data cache **56** communicate with system bus **26** and local processor **58**. Cache controller **60** performs the usual cache control functions found in caches which are suitable for use with single processor systems.

A write enable signal (WE) in tag RAM **54** is utilized when data is transferred from main memory **62** into tag RAM **54**. A processor write enable signal (WE_{P}) in tag RAM **54** is used by local processor **58** to only alter the status bits stored in tag RAM **54**. Thus, the bits which make up the tag portion of the tag, in other words the bits which are compared to determine a match, are controlled by the WE signal, while the status bit is controlled by both the WE signal and the WE_{P} signal.

When a tag is first written into tag RAM **54**, the status bit is set to a first state, preferably a 0. Tag RAM **54** determines the correct first state of the status bit when the tag is initially written into tag RAM **54**, since the WE signal is enabled in order to set the status bit to the first state. The status bit may be altered during cache operations when the WE_{P} signal is enabled by local processor **58**. The status bit is set to the second state only if a cache hit occurred while WE_{P} is activated. In the preferred embodiment, only a data out pin is required for the status bits since the proper state of the status bits may be determined internally from the state of the WE signal, WE_{P} signal, and the match pin. A input/output pin may be utilized for the status bits, however, and cache controller **60** can control the state of the status bits.

Before an entry in data cache **56** is overwritten with a new entry, which occurs as the result of a read or write "miss", cache controller **60** monitors the state of the status bit which corresponds to the entry which will be overwritten to see if the status bit has been set to a 1. If the status bit is set to a 1, the entry to be overwritten is written back to main memory before the new entry is stored in data cache **56**. If the status bit is set to a 0, the entry to be overwritten may be immediately replaced with the new entry.

The approach described above requires cache controller **60** to monitor the status bits before altering data in data cache **56**. As an alternative, the status bits may be used as status flags. Instead of having cache controller **60** monitor the state of the status bits, tag RAM **54** outputs a status flag. The status flag is set high only when the status bit is set to the second state and a cache miss occurs. The status flag indicates that data in data cache **56** must be written back to main memory **62** before it is replaced. This reduces the amount of logic required in cache controller **60**, because cache controller **60** is not required to monitor the status bits.

Upon reference to the foregoing, those skilled in the art will recognize that Applicant has provided a cache tag memory for use in a copy back cache system which utilizes an internal status bit to indicate whether data has been altered in the cache memory but not in main memory. This results in a savings of board space because a separate memory for the status bits does not have to be provided in the cache memory. Additionally, the cache memory operates more efficiently, since information about the data in the cache memory is not stored in several memory arrays. This eliminates the need for the system to access several memory arrays to retrieve data and ascertain its integrity. Although the present invention has been described with reference to multi-processor systems, it is equally applicable to single processor systems.

While the invention has been particularly shown and described with reference to a preferred embodiment, it will be understood by those skilled in the art that various changes in form and detail may be made therein without departing from the spirit and scope of the invention.

## Claims

1. A memory subsystem for a computer system, comprising:
a processor and a main memory;
a data cache connected to the processor and the main memory, said data cache having a plurality of entries;
a tag RAM connected to the processor and the main memory, said tag RAM having a plurality of entries corresponding to the data cache entries, each of such tag RAM entries having a dirty bit; and
control means for writing to the dirty bits, wherein said control means writes a first state to a dirty bit for an entry when the corresponding entry in the data cache is loaded with data from the main memory, and said control means writes a second state to the dirty bit for an entry when the processor alters data in the corresponding entry in the data cache.
